# EUROPÄISCHE PATENTANMELDUNG

(11) **EP 0 853 300 A2**
(43) Veröffentlichungstag der Anmeldung: **15.07.1998**
(21) Anmeldenummer: 97122212.0
(22) Anmeldetag: 17.12.1997
(51) Int. Cl.: G08C 17/00

(54) **Verfahren zum Überwachen eines Stromabnehmers**

(30) Priorität: 17.12.1996 DE 19652355
(71) Anmelder: SCHUNK BAHNTECHNIK GMBH, A-5023 Salzburg (AT)
(72) Erfinder: Wiessler, Ulrich, Dr., 35578 Wetzlar (DE); Rabacher, Franz, AT 5020 Salzburg (AT)
(74) Vertreter: Stoffregen, Hans-Herbert, Dr. Dipl.-Phys.

(57) **Zusammenfassung**

Die Erfindung bezieht sich auf ein Verfahren zum Überwachen eines Stromabnehmers eines schienengebundenen Fahrzeuges. Dabei wird die Stellung des Stromabnehmers bzw. dessen Zustand berührungslos überwacht. Hierzu befindet sich im Bereich des Stromabnehmers ein Funksender, über den an einen insbesondere im Fahrzeuginnern vorhandenen Empfänger für die Stellung bzw. den Zustand des Stromabnehmers repräsentative Signale übertragen werden.

## Beschreibung

Die Erfindung bezieht sich auf ein Verfahren zum Überwachen eines Stromabnehmers eines insbesondere schienengebundenen Fahrzeuges mit vorzugsweise in dem Fahrzeug vorhandener Anzeigeeinrichtung, über die Zustand und/oder Stellung des Stromabnehmers anzeig- bzw. überprüfbar ist.

Über Stromabnehmer erfolgt die Stromzufuhr zu schienengebundenen Fahrzeugen. Um auszuschließen, dass die Fassung des Stromabnehmers selbst und nicht die Kohleschleifleiste an dem Fahrdraht anliegen, wodurch der Fahrdraht zerstört werden würde, erfolgt eine Überwachung der Kohleschleifleiste bzw. des Stromabnehmers selbst. Ein Überwachen der Kohleschleifleiste kann dabei mittels Druckluft oder Lichtwellen erfolgen. Auch besteht die Möglichkeit einer Temperaturmessung oder der Überprüfung der Stellung des Stromabnehmers selbst.

Losgelöst von der Art der Überwachung sind zusätzliche Sensoren erforderlich, durch die das Gewicht des Stromabnehmers erhöht wird. Auch müssen verwendete Pneumatik- oder Elektroleitungen durch das Fahrzeugdach in das Fahrzeuginnere geführt werden. Hierdurch bedingt ist es häufig nicht möglich, nachträglich Fahrzeuge mit entsprechenden Überwachungseinrichtungen auszustatten.

Der vorliegenden Erfindung liegt die Aufgabe zugrunde, ein Verfahren der eingangs genannten Art so weiterzubilden, dass mit konstruktiv einfachen Maßnahmen der Betriebszustand des Stromabnehmers erfasst werden kann.

Die Aufgabe wird erfindungsgemäß im wesentlichen dadurch gelöst, dass die Stellung und/oder Zustand des Stromabnehmers berührungslos an die Anzeigeeinrichtung übertragen wird. Insbesondere kann ein Funksender aktiviert werden, über den an einen der Anzeigerichtung zugeordneten Empfänger für Stellung und/oder Zustand des Stromabnehmers repräsentative Signale gesendet werden.

Der Funksender selbst kann berührungslos wie z. B. induktiv oder kapazitiv aktiviert werden. Auch besteht die Möglichkeit, den Funksender durch Druckluftbeaufschlagung oder -abfall zu aktivieren. Hierzu kann die Druckluft benutzt werden, die z. B. auch zur Überwachung der Kohleschleifstücke bzw. dem Verschwenken des Stromabnehmers benutzt wird.

Durch die erfindungsgemäße Lehre besteht die Möglichkeit, ohne zusätzliche Leitungsdurchführungen durch das Dach oder sonstige Verlegung von Drähten, Kabeln, Leitungen etc. die Stellung bzw. den Zustand des Stromabnehmers bzw. dessen Schleifleisten zu überwachen. Dabei ist es nicht zwingend erforderlich, dass die Signale im Fahrzeuginneren empfangen und verarbeitet werden. Vielmehr können die Signale auch an einen anderen fernliegenden Ort übertragen werden.

Als Beispiel für die Aktivierung eines Funksenders zum Aussenden eines Signales an den Empfänger der Anzeigeeinrichtung ist eine mit Druckluft beaufschlagte Umbruchsicherung für Kohleschleifleisten zu nennen. Bei einer Beschädigung oder bei einem Bruch einer Kohleschleifleiste wird der Stromabnehmer abgesenkt. Das hierbei erfolgende Ausblasen der Druckluft kann sodann benutzt werden, um einen Funksender zu aktivieren.

Alternativ besteht die Möglichkeit, in den Schwenkweg eines Stromabnehmers einen induktiven Schalter anzuordnen, der beim Zurückfahren des Stromabnehmers mit der Folge aktiviert wird, dass ein Funksender ein entsprechendes Signal aussendet. Andere konstruktive Möglichkeiten zum Aussenden eines Signals sind gleichfalls möglich.

Insbesondere ist erfindungsgemäß vorgesehen, dass in dem Stromabnehmer, d. h. dessen Schleifleiste bzw. deren Fassung auftretende Spannungen und/oder Torsionskräfte gemessen und berührungslos übertragen werden. Hierzu können an den Orten der Überwachung Dehnungsmess-Streifen angeordnet werden. Auch besteht die Möglichkeit, über Beschleunigungssensoren die Beschleunigung des Stromabnehmers zu messen.

Losgelöst von der technischen Realisierung kann eine Fernüberwachung von auf den Stromabnehmer einwirkenden Kräften wie z. B. durch Schläge auftretenden Vertikalkräften oder in horizontaler Richtung vom Fahrdraht übertragenen Querkräften erfolgen, um bei unzulässigen Belastungen Gegenmaßnahmen zum Beispiel eine Reduzierung der Andruckkraft des Stromabnehmers einzuleiten. Selbstverständlich besteht auch die Möglichkeit, die Stellung des Stromabnehmers zu überwachen, wobei auch die Neigung und Querverschiebung berücksichtigt werden können. Gleiches gilt in Bezug auf die Größe der über den Stromabnehmer auf den Fahrdraht eingeleitete Andruckkraft.

Da aufgrund der erfindungsgemäßen Lehre zusätzliche Übertragungsleitungen in das Fahrzeuginnere nicht geführt werden müssen, können auch weitere charakteristische Größen des Stromabnehmers überwacht werden, wie zum Beispiel der Übergangswiderstand zwischen Schleifleiste und deren Fassung bzw. dieser und Anschlussleitungen. Eine Fernüberwachung des Verschleißes der Schleifleiste selbst ist ohne Weiteres möglich.

Aufgrund der erfindungsgemäßen Lehre wird ein intelligenter Stromabnehmer zur Verfügung gestellt, dessen für einen ordnungsgemäßen Betrieb charakterisitischen Daten problemlos übertragen und ausgewertet werden können, wobei durch den Vergleich von abgelegten Daten mit aktuellen Daten bereits die Gefahr von Störungen so rechtzeitig erkannt wird, dass vor Auftreten eines Störfalls Gegenmaßnahmen getroffen werden können.

Hinsichtlich des Aufbaus des Funksenders bzw. des Empfängers für die Anzeigeeinrichtung ist auf hinlänglich bekannte Funkfernsteuerungen zu verweisen, die z. B. zum Betätigen von Türen, Alarmanlagen, Standheizungen, Rolladen, Markisen oder ähnliches bekannt sind.

## Patentansprüche

1. Verfahren zum Überwachen eines Stromabnehmers eines insbesondere schienengebundenen Fahrzeuges mit vorzugsweise in dem Fahrzeug vorhandener Anzeigeeinrichtung, über die Zustand und/oder Stellung des Stromabnehmers überprüf- bzw. anzeigbar ist,
**dadurch gekennzeichnet**,
dass der Zustand und/oder die Stellung des Stromabnehmers berührungslos an einen der Anzeigeeinrichtung zugeordneten Empfänger übertragen wird.

2. Verfahren nach Anspruch 1,
**dadurch gekennzeichnet**,
dass der Stromabnehmer bei Verstellen von einer an dem Fahrdraht anliegenden Stellung in eine zu diesem beabstandeten Stellung einen Funksender aktiviert, über den an den Empfänger ein für die Stellung repräsentatives Signal abgesendet wird.

3. Verfahren nach Anspruch 1 oder 2,
**dadurch gekennzeichnet**,
dass die berührungslose Signalübertragung mittels eines berührungslos wie induktiv oder kapazitiv aktivierten Funksenders erfolgt.

4. Verfahren nach zumindest einem der vorhergehenden Ansprüche,
**dadurch gekennzeichnet**,
dass der Funksender durch zur Betätigung bzw. Überwachung des Stromabnehmers bzw. dessen Schleifleiste verwendete Druckluft aktiviert wird.

5. Verfahren nach zumindest einem der vorhergehenden Ansprüche,
**dadurch gekennzeichnet,**
dass eine Verschleissüberwachung der Schleifleiste erfolgt.

6. Verfahren nach zumindest einem der vorhergehenden Ansprüche,
**dadurch gekennzeichnet,**
dass in der Schleifleiste bzw. deren Fassung auftretende Spannungen und/oder Torsionskräfte vorzugsweise über einen Dehnungsmess-Streifen erfasst und fernübertragen werden.

7. Verfahren nach zumindest einem der vorhergehenden Ansprüche,
**dadurch gekennzeichnet,**
dass über Beschleunigungssensoren die Beschleunigung des Stromabnehmers gemessen und fernübertragen wird.

8. Verfahren nach zumindest einem der vorhergehenden Ansprüche,
**dadurch gekennzeichnet,**
dass eine Temperaturüberwachung von zumindest Bereichen bzw. Abschnitten des Stromabnehmers, insbesondere dessen Schleifleiste und/oder Fassung erfolgt.

9. Verfahren nach zumindest einem der vorhergehenden Ansprüche,
**dadurch gekennzeichnet,**
dass charakteristischen Werten des Stromabnehmers entsprechende Signale fernübertragen und mit abgelegten einen ordnungsgemäßen Zustand des Stromabnehmers repräsentativen Werten verglichen werden und dass bei einer unzulässigen Abweichung ein Alarm ausgelöst wird und/oder Maßnahmen zur Behebung und /oder Verhinderung von auftretenden Störungen des Stromabnehmers einleitbar sind.
